# EUROPEAN PATENT APPLICATION

(11) **EP 3 151 161 A1**
(43) Date of publication of application: **05.04.2017**
(21) Application number: 16189134.6
(22) Date of filing: 16.09.2016
(51) Int. Cl.: G06K 9/00, G06K 9/03, G07G 1/00, G07G 1/12

(54) **INFORMATION PROCESSING APPARATUS AND METHOD OF CONTROLLING AN INFORMATION PROCESSING APPARATUS**

(30) Priority: 30.09.2015 JP 2015192803
(71) Applicant: Toshiba TEC Kabushiki Kaisha, Tokyo 141-0032 (JP)
(72) Inventor: SASAKI, Yuta, Shinagawa-ku, Tokyo 141-8562 (JP)
(74) Representative: Takeuchi, Maya

(57) **Abstract**

According to an embodiment, an information processing apparatus includes an image pickup device and a processor. The image pickup device sequentially picks up an image of an image pickup target, which is positioned in a predetermined image pickup area by an operator and outputs the picked-up image. When detection of an article from the picked-up image ends, the processor judges whether or not the operator has an intention to pick up the image.

## Description

### FIELD

An embodiment described here generally relates to an information processing apparatus and a method of controlling the same.

### BACKGROUND

In recent years, an information processing apparatus that identifies commodities by image recognition, not a typical method of identifying commodities by reading a bar code, has been used. The information processing apparatus performs matching between data on an image obtained as a result of picking up an image of an article and data on a commodity. As a result of matching, when the data on the thus obtained image of the article is similar to the data on the commodity above a certain level, the information processing apparatus automatically determines that the imaged article is the commodity indicated by the matched data.

When such automatic determination is not possible, the information processing apparatus presents candidate commodities to an operator by displaying the candidate commodities, for example. When the candidate commodities is presented, the information processing apparatus temporarily stops the subsequent image recognition, and prompts the operator to perform an operation, by displaying guidance, for example. Then, the operator performs an operation of selecting any of the presented candidate commodities or cancelling all the candidate commodities.

In such an information processing apparatus, the following inconvenience occurs if the image pickup based on which the candidate commodities have been presented has been involuntarily performed by the operator, the following inconveniences occurs. That is, for example, also when an article other than a commodity is accidentally imaged, the information processing apparatus performs an operation for finding the candidate commodities. When the information processing apparatus finds the candidate commodities, the information processing apparatus presents the candidate commodities to the operator and temporarily stops the image recognition processing. In order for the information processing apparatus to re-start the temporarily stopped image recognition processing, the operator has to make an operation. Thus, if the image pickup based on which the candidate commodities have been presented has been involuntarily performed by the operator, there is a need for the operator to spend time and effort canceling all the candidate commodities presented by the information processing apparatus.

### BRIEF DESCRIPTION OF THE DRAWINGS

Fig. 1 is a perspective view of an outer appearance of a checkout system according to an embodiment.
Fig. 2 is a block diagram illustrating hardware configurations of a POS terminal apparatus and a commodity reading apparatus according to the embodiment.
Fig. 3 is a schematic view of an exemplary data configuration of a PLU file according to the embodiment.
Fig. 4 is a block diagram illustrating functional configurations of the POS terminal apparatus and the commodity reading apparatus according to the embodiment.
Fig. 5 is a view of an exemplary commodity candidate screen displayed in the commodity reading apparatus according to the embodiment.
Fig. 6 is a view of an exemplary guidance screen displayed when candidate commodities have been recognized in the commodity reading apparatus according to the embodiment.
Fig. 7 is a view of an exemplary guidance screen displayed when the candidate commodities have not been recognized in the commodity reading apparatus according to the embodiment.
Fig. 8 is a flowchart of processing executed by the commodity reading apparatus according to the embodiment.

### DETAILED DESCRIPTION

According to an embodiment, an information processing apparatus includes an image pickup device, a display device, a memory, and a processor. The image pickup device sequentially picks up an image of an image pickup target, which is positioned in a predetermined image pickup area by an operator for picking up an image of a commodity to be purchased by a customer.

The image pickup device outputs the picked-up image on the basis of a result of image pickup. The display device displays information on the picked-up image. The memory is for storing a computer-executable program. The processor performs detection processing of detecting an article from the output picked-up image by executing the program stored in the memory. In addition, the processor performs recognition processing of comparing, when the article is detected by the detection processing, similarity values between the detected article and a plurality of registered commodities that are references with one another for each of the registered commodities, and recognizing, from among the plurality of registered commodities, a candidate commodity for the commodity to be purchased by the customer. In addition, the processor causes the display device to display the candidate commodity recognized by the recognition processing in a selectable manner. In addition, the processor judges, when the detection of the article by the detection processing ends, whether or not the operator has an intention to pick up the image. The processor continues the recognition processing when it is judged that the operator has no intention to pick up the image.

Preferably, the processor further temporarily stops, when it is judged that the operator has the intention to pick up the image, at least part of processing performed before the recognition processing, and receives an operation for selecting the candidate commodity displayed by the display device or receives an operation for instructing to re-start the temporarily stopped processing.

Preferably, the processor may be configured to judge that the operator has the intention to pick up the image when an elapsed time between the detection of the article by the detection processing and the end of the detection of the article by the subsequent detection processing is equal to and larger than a predetermined first threshold, and to judge that the operator has no intention to pick up the image when the elapsed time is smaller than the first threshold.

Preferably, the processor may be configured to judge whether or not the article of the picked-up image is in focus, and to judge that the operator has the intention to pick up the image when the article of the picked-up image is in focus, and judge that the operator has no intention to pick up the image when the article of the picked-up image is out of focus.

Preferably, the processor may further judge whether or not a predetermined condition associated with an elapsed time after the detection of the article by the detection processing is satisfied, and temporarily stop the recognition processing when the predetermined condition associated with the elapsed time after the detection of the article by the detection processing is satisfied, and cause the display device to display a guidance screen for receiving an operation for selecting the candidate commodity displayed by the display device and an operation for instructing to re-start the temporarily stopped recognition processing.

Preferably, the processor judges, when the elapsed time after the detection of the article by the detection processing is equal to and larger than a predetermined second threshold different from the predetermined first threshold, that the predetermined condition associated with the elapsed time after the detection of the article by the detection processing is satisfied.

Preferably, the predetermined first threshold is a time period shorter than the predetermined second threshold.

The information processing apparatus may further comprise a first storage device that stores the picked-up image output by the image pickup device.

According to this embodiment, the processor may read out the picked-up image from the first storage device in the order of storing the picked-up image in the first storage device, and perform the detection processing and the recognition processing on the basis of the read-out picked-up image.

The information processing apparatus may further comprise a second storage device that stores a plurality of feature amounts of the plurality of registered commodities. The processor may perform the recognition processing of extracting a feature amount of the article, which is detected by the detection processing, on the basis of the read-out picked-up image, comparing the extracted feature amount of the article with each of the feature amounts of the plurality of registered commodities, the plurality of feature amounts being stored in the second storage device, calculating, on the basis of a result of the comparison, a plurality of similarity values for each of the plurality of registered commodities, judging whether or not each of the calculated similarity values is equal to or larger than a predetermined threshold, and selecting one of the registered commodities, which has one of the calculated similarity values, which is judged to be equal to or larger than the predetermined threshold, as the candidate commodity for the detected article, and recognizing the selected candidate commodity for the article as a candidate commodity for the commodity to be purchased by the customer.

Preferably, the processor causes the display device to display information on the candidate commodity recognized by the recognition processing, and the display device displays the picked-up image in a predetermined display area together with the information on the candidate commodity.

Preferably, the information on the candidate commodity includes an image and a commodity name of the registered commodity recognized as the candidate commodity.

Preferably, the processor temporarily stops, when it is judged that the operator has the intention to pick up the image, the recognition processing and causes the display device to display a guidance screen for receiving operator's operation for selecting the candidate commodity displayed on the display device and operator's operation for instructing to re-start the temporarily stopped recognition processing.

Preferably, the processor temporarily stops, when it is judged that the operator has the intention to pick up the image, the recognition processing and displays, in the predetermined display area, a message for prompting selection of the candidate commodity and a message for prompting instruction to re-start the temporarily stopped recognition processing instead of displaying the picked-up image.

The present invention further relates to a method of controlling an information processing apparatus, comprising: performing detection processing of detecting an article from a picked-up image output from an image pickup device that sequentially picks up an image of an image pickup target, which is positioned in a predetermined image pickup area by an operator; performing recognition processing of comparing, when the article is detected by the detection processing, similarity values between the detected article and a plurality of registered commodities that are references with one another, and recognizing, from among the plurality of registered commodities, the candidate commodity for a commodity to be purchased by a customer; causing a display device to display the candidate commodity recognized by the recognition processing in a selectable manner; and judging whether or not the operator has an intention to pick up the image when the detection of the article by the detection processing ends, and continuing the recognition processing when it is judged that the operator has no intention to pick up the image.

The method may further comprise: temporarily stopping at least part of processing performed before the recognition processing when it is judged that the operator has the intention to pick up the image; and receiving operator's operation for selecting the candidate commodity displayed on the display device or receiving operator's operation for instructing to re-start the temporarily stopped processing.

Preferably, in judging whether or not the operator has an intention to pick up the image, when an elapsed time between the detection of the article by the detection processing and the end of the detection of the article by the subsequent detection processing is equal to and larger than a predetermined first threshold, it is judged that the operator has the intention to pick up the image, and, when the elapsed time is smaller than the first threshold, it is judged that the operator has no intention to pick up the image.

Preferably, in displaying the candidate commodity in the selectable manner, information on the candidate commodity recognized by the recognition processing is displayed together with the picked-up image.

The method may further comprise judging, after the candidate commodity is displayed in the selectable manner, whether or not the candidate commodity has been selected.

The method may further comprise temporarily stopping the recognition processing, when the candidate commodity has not been selected and an elapsed time after the detection of the article by the detection processing is equal to and larger than a predetermined second threshold that is a time period longer than the predetermined first threshold.

The method may further comprise causing the display device to display a guidance screen for prompting selection of the candidate commodity displayed by the display device or for receiving instruction to re-start the temporarily stopped recognition processing.

The method may further comprise performing the detection processing again when the candidate commodity has not been selected and the elapsed time after the detection of the article by the detection processing is smaller than the predetermined second threshold, wherein judging whether or not the operator has an intention to pick up the image includes judging whether or not the operator has an intention to pick up the image when the detection of the article by the detection processing performed again ends.

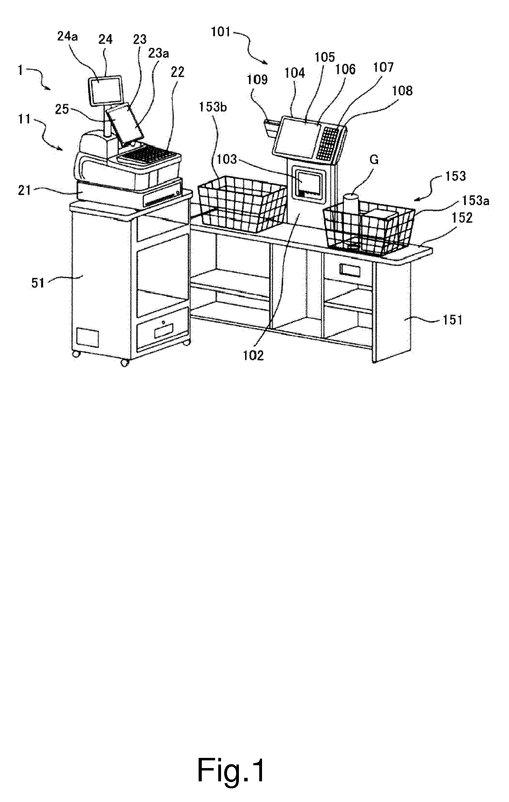

Hereinafter, the information processing apparatus according to the embodiment, a method of controlling the same, and the like will be further described, as non-limiting examples, with reference to the drawings. In the drawings, the same reference symbols show the same or similar parts. In this embodiment, the information processing apparatus is a commodity reading apparatus 101, for example. Fig. 1 is a perspective view of an outer appearance of a checkout system 1 according to the embodiment. As shown in Fig. 1, the checkout system 1 includes a point of sale (POS) terminal apparatus 11 and a commodity reading apparatus 101. The checkout system 1 is introduced into a store such as a supermarket.

The POS terminal apparatus 11 is placed on the upper surface of a drawer 21 as shown in Fig. 1. The drawer 21 is placed on a checkout table 51. The drawer 21 houses bills and coins. The drawer 21 is controlled to be opened by the POS terminal apparatus 11.

The POS terminal apparatus 11 includes a keyboard 22, a display device 23 for the operator, a customer display device 24, and a touch panel 25.

The keyboard 22 is arranged on the upper surface of the POS terminal apparatus 11. The keyboard 22 receives an operation made by an operator (e.g., store clerk). The display device 23 is provided further behind the keyboard 22 as viewed from the operator who operates the keyboard 22. The display device 23 displays information directed to the operator on a display surface 23a. The touch panel 25 is laminated on the display surface 23a. The touch panel 25 receives an operation made by the operator. The customer display device 24 is provided further behind the display device 23. The customer display device 24 displays information directed to a customer on a display surface 24a.

The commodity reading apparatus 101 is placed on a counter table 151. The counter table 151 is a wide table. The counter table 151 is arranged to form an L shape with the checkout table 51. The upper surface of the counter table 151 is a load-receiving surface 152. A shopping basket 153 that houses commodities G is placed on the load-receiving surface 152. The shopping basket 153 includes a first shopping basket 153a and a second shopping basket 153b. The first shopping basket 153a is carried in by the customer. The second shopping basket 153b is placed at a position sandwiching the commodity reading apparatus 101 with the first shopping basket 153a.

The commodity reading apparatus 101 is connected to the POS terminal apparatus 11 such that the commodity reading apparatus 101 can send and receive data on commodities and the like to/from the commodity reading apparatus 101. The commodity reading apparatus 101 includes a housing 102 having a thin rectangular shape.

A reading window 103 is arranged on the front surface of the housing 102. A display and operation device 104 is attached to an upper part of the housing 102. The display and operation device 104 includes a display device 106 for the operator, a keyboard 107, a customer display device 109, and the like. The display device 106 is arranged on the front surface of the display and operation device 104 as viewed from the operator. The display device 106 is a liquid-crystal display device, for example. A touch panel 105 is laminated on the surface of the liquid-crystal display device. The display device 106 displays information provided to the operator.
The keyboard 107 is disposed on the right of the display device 106 in Fig. 1. A card reading groove 108 of a card reader (not shown) is provided on the right of the keyboard 107. The customer display device 109 is provided on the left back side of the rear surface of the display and operation device 104 as viewed from the operator. The customer display device 109 displays information provided to the customer.

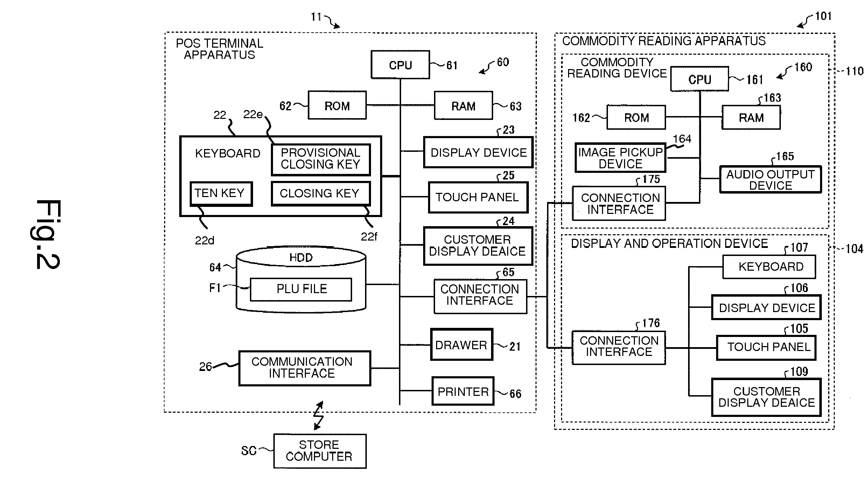

The first shopping basket 153a carried in by the customer houses the commodities G associated with one transaction. The commodities G are commodities to be purchased by the customer. Specifically, the commodities G are commodities of the commodities sold in the store, which are carried in the checkout system 1 by the customer for purchasing them. Each of the commodities G in the first shopping basket 153a is moved to the second shopping basket 153b by the operator who operates the commodity reading apparatus 101. In this movement process, the commodity G is faced to the reading window 103 of the commodity reading apparatus 101. At this time, an image pickup device 164 (see Fig. 2) provided in the reading window 103 picks up an image of the commodity G. That is, the image pickup device 164 sequentially picks up images of the commodities, which is moved by operator's operation, through the reading window 103. The image pickup device 164 will be described later in detail.

Fig. 2 is a block diagram illustrating hardware configurations of the POS terminal apparatus 11 and the commodity reading apparatus 101. The POS terminal apparatus 11 includes a microcomputer 60 that executes information processing. The microcomputer 60 includes a processor 61 that controls the respective sections that execute various types of arithmetic processing. The processor 61 is a central processing unit (CPU), for example. Hereinafter, the processor 61 will be sometimes referred to as a CPU 61. The microcomputer 60 further includes a read only memory (ROM) 62 and a random access memory (RAM) 63. The ROM 62 stores programs to be executed by the CPU 61. Further, the microcomputer 60 includes a clocking unit (not shown) such as a real time clock (RTC) that counts time.

Other than the respective sections (drawer 21, keyboard 22, display device 23, customer display device 24, touch panel 25), a communication interface 26, a hard disk drive (HDD) 64, a connection interface 65, and a printer 66 are connected to the CPU 61 of the POS terminal apparatus 11 via various input/output circuits (any of which is not shown).

The keyboard 22 includes a ten key 22d. Numbers such as "1", "2", and "3" and a multiplication operator "x" and the like are displayed on the upper surface of the ten key 22d. The keyboard 22 includes a provisional closing key 22e and a closing key 22f.

The HDD 64 stores various programs and various files. For example, at the start of the POS terminal apparatus 11, the CPU 61 copies all or some of the programs stored in the HDD 64 to the RAM 63 and executes the programs.

Further, the HDD 64 stores a data file such as a price look up (PLU) file F1. The PLU file F1 can be read out by the commodity reading apparatus 101 via the connection interface 65.

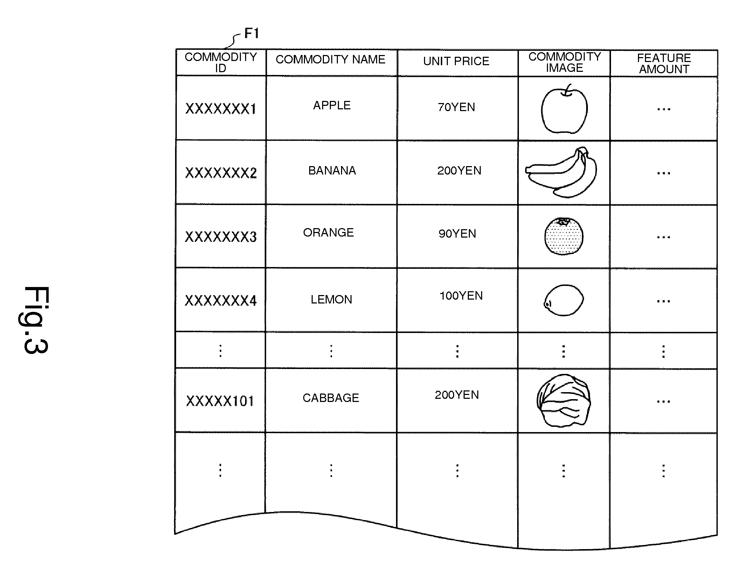

The PLU file F1 is a data file in which association of each of the commodities sold in the store with information on sales registration or the like of the commodity is set. That is, all the commodities sold in the store are registered in the PLU file F1. Hereinafter, the commodities registered in the PLU file F1 will be referred to as registered commodities. The registered commodities are used as reference commodities when automatic determination to be described later and recognition processing to be described later are performed. Fig. 3 is a schematic view of an exemplary data configuration of the PLU file F1. As shown in the figure, for each of the registered commodities, a commodity ID, information on the registered commodity, and a commodity image of the registered commodity are registered in the PLU file F1 in association with one another. The commodity ID is identification data uniquely assigned to the registered commodity. The information on the registered commodity includes the commodity name (e.g., apple, banana, orange, cabbage) of the registered commodity, the unit price of the registered commodity, and the like.

The commodity image of the registered commodity is an image of the registered commodity, which is picked up in advance (picked-up images). Further, for each registered commodity, a feature amount of the registered commodity (data indicating the feature amount of the registered commodity) is registered in the PLU file F1. That is, the registered commodities and the feature amounts thereof are registered in association with one another in the PLU file F1. The feature amount will be described later in detail.

The commodity image of the registered commodity is a comparison target that is compared with the picked-up image of the article, which is output by the image pickup device 164, when the similarity is judged in the automatic determination to be described later and the recognition processing to be described later. The commodity image of the registered commodity is, as described above, an image of the registered commodity, which is picked up in advance (picked-up images). Further, when candidate commodities to be described later are displayed, the commodity images of the registered commodities are displayed by the display device 106 as images expressing the candidate commodities. Further, the feature amount of each registered commodity is extracted from the commodity image of the registered commodity in advance. The feature amount of each registered commodity is registered in the PLU file F1 in association with the corresponding commodity ID. Here, the feature amount is information indicating a feature of the registered commodity. Specifically, the feature amount includes information indicating a state of the surface of the registered commodity. The state of the surface of the registered commodity includes, for example, the color of the surface, the pattern of the surface, the concave-convex state of the surface, and the shape of the surface.

Note that, although, in this embodiment, the feature amount of each registered commodity is registered in the PLU file F1 in advance, it is not limited thereto. An embodiment in which the feature amount is not registered may be employed. For example, an embodiment in which, every time the feature amount extracting section 1613 of the CPU 161 to be described later extracts a feature amount from each of the commodity images, the feature amount is acquired may be employed. Further, images for display of the candidate commodities may be registered in the PLU file F1 instead of the commodity images.

Referring back to Fig. 2, the CPU 61 of the POS terminal apparatus 11 sends and receives data on the commodities and the like to/from a store computer SC via the communication interface 26. The store computer SC is set in a backyard or the like of the store. The PLU file F1 to be distributed to the POS terminal apparatus 11, an inventory management file for managing the inventory condition of each of the registered commodities registered in this PLU file F1, and the like are stored in a HDD (not shown) of the store computer SC.

The CPU 61 of the POS terminal apparatus 11 sends and receives data on the commodities to/from the commodity reading apparatus 101 via the connection interface 65. Further, under the control of the CPU 61, the POS terminal apparatus 11 prints the transaction contents of one transaction by the use of the printer 66.

The commodity reading apparatus 101 includes a commodity reading device 110 and the display and operation device 104 as shown in Fig. 2. The commodity reading device 110 includes a microcomputer 160. The microcomputer 160 includes a processor 161. The processor 161 is a CPU, for example. Hereinafter, the processor 161 will be sometimes referred to as a CPU 161. The microcomputer 160 further includes a ROM 162 and a RAM 163. The ROM 162 stores programs to be executed by the CPU 161. Further, the microcomputer 160 includes a clocking unit (not shown) such as an RTC that counts time.

The image pickup device 164, an audio output device 165, and a connection interface 175 are connected to the CPU 161 via various input/output circuits (any of which are not shown). Operations of the respective sections (image pickup device 164, audio output device 165, and connection interface 175) are controlled by the CPU 161.

The image pickup device 164 includes a color charge coupled device (CCD) sensor, a color complementary metal oxide semiconductor (CMOS) sensor, and the like. The image pickup device 164 sequentially picks up images of image pickup targets positioned in or moved to a predetermined image pickup area, which is determined by the reading window 103, for picking up images of the commodities G, i.e., the commodities to be purchased by the customer. The image pickup device 164 sequentially outputs picked-up images on the basis of a result of image pickup. For example, the operator moves the commodity G from the first shopping basket 153a to the second shopping basket 153b. In the process of moving the commodity G, the operator faces the commodity G to the reading window 103. The commodity G is positioned in the predetermined image pickup area by the operator's operation. The image pickup device 164 picks up an image of the commodity G, which is positioned in the predetermined image pickup area by the operator's operation, through the reading window 103. For example, the image pickup device 164 picks up a moving image of 30 fps. The picked-up images (frame images) sequentially picked up and output by the image pickup device 164 at the predetermined frame rate are stored in the RAM 163. The audio output device 165 includes an audio circuit, a speaker, and the like for generating a warning sound or the like set in advance. The audio output device 165 performs alerting by sound such as the warning sound under the control of the CPU 161.

The display and operation device 104 includes the touch panel 105, the display device 106 for the operator, the keyboard 107, the customer display device 109, and a connection interface 176. The connection interface 175 of the commodity reading device 110 is connected to the connection interface 65 of the POS terminal apparatus 11. The connection interface 175 of the commodity reading device 110 enables transmission and reception of data between the commodity reading device 110 and the POS terminal apparatus 11 to be performed. Further, the connection interface 175 of the commodity reading device 110 is connected to the connection interface 176 of the display and operation device 104. The connection interface 175 of the commodity reading device 110 enables transmission and reception of data between the commodity reading device 110 and the display and operation device 104 to be performed. That is, the CPU 161 of the commodity reading device 110 transmits and receives data on the commodities and the like to/from the display and operation device 104 via the connection interface 175.

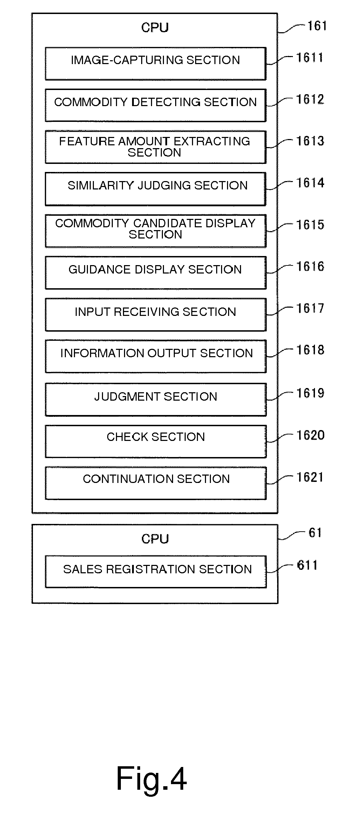

Next, the functional configurations of the CPU 161 that are realized by the CPU 161 executing the programs and the functional configurations of the CPU 61 that are realized by the CPU 61 executing the programs will be described with reference to Fig. 4. Fig. 4 is a block diagram illustrating functional configurations of the POS terminal apparatus 11 and the commodity reading apparatus 101. As shown in Fig. 4, by executing the programs, the CPU 161 of the commodity reading apparatus 101 functions as an image-capturing section 1611, a commodity detecting section 1612, a feature amount extracting section 1613, a similarity judging section 1614, a commodity candidate display section 1615, a guidance display section 1616, an input receiving section 1617, an information output section 1618, a judgment section 1619, a check section 1620, and a continuation section 1621.

The image-capturing section 1611 of the CPU 161 outputs an image pickup ON signal to the image pickup device 164 to causes the image pickup device 164 to start an image pickup operation. The image-capturing section 1611 of the CPU 161 captures the picked-up images by sequentially reading out the picked-up images. The picked-up images are picked up by the image pickup device 164 and stored in the RAM 163 after the image pickup operation is started. The picked-up images are captured by the image-capturing section in the order of storing the picked-up images in the RAM 163.

The commodity detecting section 1612 of the CPU 161 performs detection processing of detecting an article of each of the picked-up images captured by the image-capturing section 1611. Specifically, the commodity detecting section 1612 extracts and detects an entire or partial outline of the article using a well-known pattern matching technique or the like. Then, the commodity detecting section 1612 compares an outline extracted from the previous picked-up image (frame image) with an outline extracted from the current picked-up image and detects a changed portion, i.e., an area of the image in which the article faced to the reading window 103 is included. Note that the article of the picked-up image may be the commodity G or may not be the commodity G. Further, at the time of the detection processing, the CPU 161 cannot identify whether or not the detected article is the commodity G. The CPU 161 can identify whether or not the detected article is the commodity G, in the automatic determination to be described later or in receiving operator's selection of one of the candidate commodities to be described later.

As another method of the detection processing, the commodity detecting section 1612 of the CPU 161 judges whether or not the skin-colored area has been detected from the picked-up image. When the skin-colored area has been detected, that is, when the operator's hand has been detected from the image, the commodity detecting section 1612 detects the outline near this skin-colored area. The commodity detecting section 1612 attempts to extract an outline of the article assumed to be grasped by the operator's hand. At this time, if the outline indicating the shape of the hand and an outline of an object other than the hand near the outline of the hand have been detected, the commodity detecting section 1612 detects the article from the outline of the object.

The feature amount extracting section 1613 of the CPU 161 extracts, from the picked-up image captured by the image-capturing section 1611, information indicating the state of the surface of the article detected by the commodity detecting section 1612. This information is extracted as the feature amount. Here, the state of the surface of the detected article includes, for example, the color of the surface, the pattern of the surface, the concave-convex state of the surface, and the shape of the surface.

Therefore, the feature amount of the article includes information indicating the color, pattern, concave-convex state, shape, and the like of the surface. Hereinafter, the article detected by the commodity detecting section 1612 will be sometimes simply referred to as a detected article.

The similarity judging section 1614 of the CPU 161 automatically determines a commodity corresponding to the commodity G. Hereinafter, the automatically determined commodity will be sometimes referred to as a determined commodity. Further, when the automatic determination is not possible, the similarity judging section 1614 performs recognition processing of recognizing candidate commodities for the commodity G. The similarity judging section 1614 includes a determiner (determination means). The determiner (determination means) is a functional unit that performs the automatic determination. The similarity judging section 1614 further includes a selector (selection means). The selector (selection means) is a functional unit that performs recognition processing. The determiner of the CPU 161 compares the detected article with the plurality of registered commodities. Note that, here, the detected article to be compared is data based on the picked-up image of the detected article, for example. Further, the plurality of registered commodities to be compared are data on the registered commodities, for example. When the registered commodity that can be judged to be similar above a certain level is present as a result of comparison, the determiner judges that this registered commodity is equivalent to the detected article. Then, the CPU 161 automatically determines that the registered commodity judged to be equivalent to the detected article is a determined commodity for the commodity G, i.e., a determined commodity for the commodity to be purchased by the customer. On the other hand, when the determiner cannot achieve the automatic determination, the selector of the CPU 161 selects a registered commodity that may be equivalent to the detected article, as a candidate commodity for the detected article. Then, the CPU 161 recognizes the selected candidate commodity for the detected article, as a candidate commodity for the commodity G, i.e., the candidate commodity for the commodity to be purchased by the customer.

The automatic determination will be described in further detail. First, the similarity judging section 1614 of the CPU 161 compares the feature amount of each registered commodity registered in the PLU file F1 with the feature amount of the detected article extracted by the feature amount extracting section 1613 and calculates a similarity value for each registered commodity.

When the registered commodities each having a similarity value equal to or larger than a predetermined threshold, includes a single registered commodity having a similarity value much higher than the others, the similarity judging section 1614 (determiner) of the CPU 161 judges that the single registered commodity is equivalent to the detected article. Then, the CPU 161 automatically determines that the registered commodity judged to be equivalent to the detected article is the determined commodity for the commodity G.

Recognition processing for the candidate commodities will be described in further detail. As described above, the similarity judging section 1614 (selector) of the CPU 161 performs recognition processing of recognizing the candidate commodities for the commodity G when the determiner cannot achieve the automatic determination. That is, the similarity judging section 1614 selects a registered commodity (commodity ID) having one of the calculated similarity values, which is equal to or larger than the predetermined threshold, as the candidate commodity for the detected article. Then, the similarity judging section 1614 recognizes the selected candidate commodity for the detected article as the candidate commodity for the commodity G. Note that the threshold used for the automatic determination and the threshold used for the recognition processing may be the same.

Further, the reference for comparing the similarity values with one another can be arbitrarily set. For example, the similarity judging section 1614 of the CPU 161 compares the similarity value calculated for each registered commodity with a highest value of the similarity values calculated for candidate commodities for other commodities G. By this comparison, the similarity judging section 1614 may automatically determine that a registered commodity having a similarity value equal to or larger than 20%, for example, is the determined commodity for the commodity G.

Further, the similarity value only needs to be a value (similarity value) indicating how much degree the feature amount of the detected article is similar to the feature amount of each registered commodity that is registered in the PLU file F1 and serves as the reference. Note that the similarity value is not limited to this example and may be a value indicating a degree of matching between the feature amount of the detected article and the feature amount of each registered commodity registered in the PLU file F1. In addition, the similarity value may be a value indicating how much degree the feature amount of the detected article is correlated to the feature amount of each registered commodity registered in the PLU file F1.

Recognizing an object of an image in this way is called generic object recognition. Concerning such generic object recognition, various recognition techniques are explained in a document described below, for example.
Keiji Yanai, "The Present Situation and The Future of Generic Object Recognition", The Institute of Electronics, Information and Communication Engineers Transaction, Vol. 48, No. SIG 16 [retrieved on Dec. 12, 2013], Internet <URL: http://mm.cs.uec.ac.jp/IPSJ-TCVIM-Yanai pdf>

Further, a technique for performing the generic object recognition by dividing an area of an image for each article (object) is explained in a document described below, for example.

Jamie Shotton, et al., "Semantic Texton Forests for Image Categorization and Segmentation", [retrieved on Dec. 12, 2013], Internet <URL: http://citeseerx.ist.psu.edu/viewdoc/download?doi=10.1 .1 .1 45.3036&rep=repl&type=dpf>

Note that any method can be employed as a method of calculating the similarity values. For example, the similarity judging section 1614 of the CPU 161 may calculate the similarity values as absolute evaluation values or may calculate the similarity values as relative evaluation values. When the similarity judging section 1614 calculates the similarity values as the absolute evaluation values, the similarity judging section 1614 only needs to compare the detected article with each of the registered commodities in a one-to-one relationship and employ similarity values, which are derived as a result of comparison, for the automatic determination or the recognition processing as they are.

Meanwhile, when the similarity judging section 1614 calculates the similarity values as the relative evaluation values, the similarity judging section 1614 may calculate the similarity values such that the total sum of similarity values between the detected article and each of the registered commodities is 1.0 (100%).

The commodity candidate display section 1615 and the input receiving section 1617 of the CPU 161 cooperate with each other to function as the selection receiver. The selection receiver presents the candidate commodities for the commodity G, which are recognized (selected) by the similarity judging section 1614 (selector), through an output device, and receives selection of one of those candidate commodities through the input device.

The commodity candidate display section 1615 of the CPU 161 displays, on the display device 106 that is the output device, information on the registered commodities, which are recognized as the candidate commodities for the commodity G by the similarity judging section 1614. More specifically, the commodity candidate display section 1615 reads out, from the PLU file F1, the registered commodities recognized as the candidate commodities for the commodity G and displays the registered commodities in a commodity candidate screen of the display device 106.

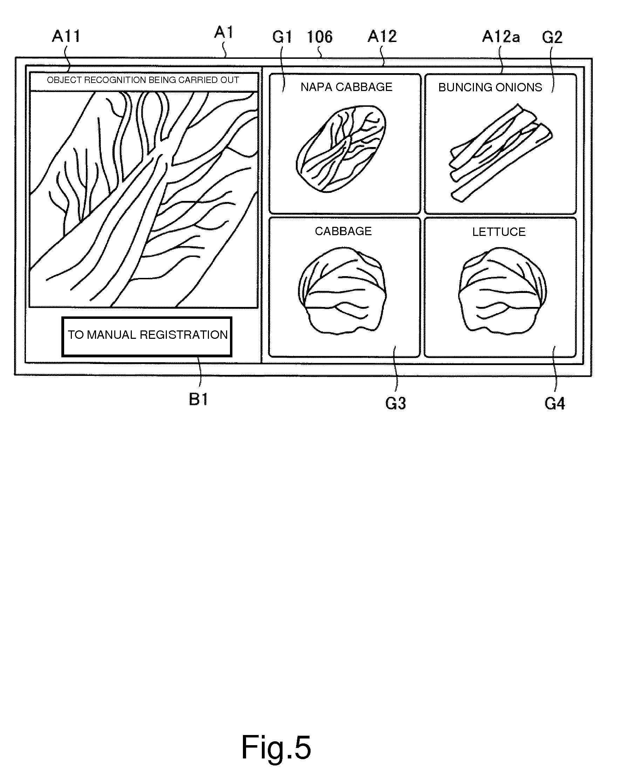

Fig. 5 is a view of an exemplary commodity candidate screen. As shown in Fig. 5, a commodity candidate screen A1 displayed by the display device 106 includes a picked-up image area A11 and a commodity candidate area A12.

The picked-up image area A11 is an area for displaying the picked-up image captured by the image-capturing section 1611 of the CPU 161. The picked-up image area A11 displays the picked-up image. The picked-up image area A11 also displays a character string, for example, "Object recognition being carried out", which indicates that an image is currently being picked up, as guidance to the operator. A manual registration button B1 is displayed in a lower portion of the picked-up image area A11. The manual registration button B1 is used by the operator for manually registering the commodity G through a category code, a commodity list, or the like. The CPU 161 displays a manual registration screen (not shown) on the display device 106. The manual registration screen (not shown) is used by the operator for automatically registering the commodities G in response to reception of the operator's operation using the manual registration button B1. Note that the CPU 161 processes the commodity G, which is registered by the operator via the manual registration screen, as the determined commodity.

The commodity candidate area A12 is an area for displaying information on the registered commodities recognized as the candidate commodities G1 (Napa cabbage), G2 (Bunching onions), G3 (Cabbage), and G4 (Lettuce) for the commodity G. Display areas A12a are arranged in the commodity candidate area A12. Fig. 5 shows an example in which four display areas A12a are arranged in the commodity candidate area A12. However, the number of display areas A12a is not particularly limited. Further, the number of display areas A12a may be dynamically increased or decreased depending on the number of candidate commodities for the commodity G.

The commodity candidate display section 1615 of the CPU 161 arranges and displays, in the display areas A12a, information on the commodity images, the commodity names, and the like of the candidate commodities G1 to G4 for the commodity G. Hereinafter, the candidate commodities G1 to G4 for the commodity G includes information on the commodity images, the commodity names, and the like of the candidate commodities. The candidate commodities G1 to G4 for the commodity G in the commodity candidate area A12 are displayed in a selectable manner according to a touch operation made by the operator with respect to the touch panel 105. Here, the arrangement order of the candidate commodities G1 to G4 for the commodity G is not particularly limited. For example, an embodiment in which the candidate commodities for the commodity G are sequentially arranged from the display area A12a at the left of the figure to the display area A12a at the lower right in the order of higher similarity may be employed. With this arrangement, the operator of the commodity reading apparatus 101 can determine the commodity G by selecting one of the candidate commodities G1 to G4 for the commodity G, which are displayed in the commodity candidate area A12.

The guidance display section 1616 of the CPU 161 temporarily stops any of the processes performed between the image pickup by the image pickup device 164 and the recognition processing, due to satisfaction of a predetermined condition associated with an elapsed time after article detection by the detection processing of the commodity detecting section 1612. In addition, as well as the temporary stop, the guidance display section 1616 receives an operation made by the operator for selecting one of the candidate commodities G1 to G4 for the commodity G or operator's operation made by the operator for instructing to re-start the temporarily stopped processing. Note that, hereinafter, the elapsed time after the article detection by the detection processing of the commodity detecting section 1612 will be sometimes simply referred to as an elapsed time T1. Further, the elapsed time T1 is specifically a value of the number of counts to be described later. For example, the predetermined condition means a condition "the value of the number of counts is equal to or larger than a predetermined first threshold '10'" in Step S5 to be described later or a condition "the value of the number of counts is equal to or larger than a predetermined second threshold '30'" in Step S41 to be described later.

Examples of processing that can be a target to be temporarily stopped and re-started as described above include image pickup by the image pickup device 164, image capturing by the image-capturing section 1611, detection processing by the commodity detecting section 1612, feature amount extraction by the feature amount extracting section 1613, similarity value calculation by the similarity judging section 1614, and recognition processing by the similarity judging section 1614. Hereinafter, an example in the case where the processing that is the target to be temporarily stopped and re-started by the guidance display section 1616 is the recognition processing will be described.

When a predetermined time (e.g., 1 second) has elapsed after the article detection by the detection processing of the commodity detecting section 1612, the guidance display section 1616 of the CPU 161 displays a guidance screen (e.g., see Step S42 to be described later). Further, when the guidance display section 1616 displays the guidance screen, the guidance display section 1616 changes the contents of the guidance screen depending on whether or not the similarity judging section 1614 of the CPU 161 has recognized the candidate commodities for the commodity G. Note that, at timing when the guidance screen is displayed, the similarity judging section 1614 stops the recognition processing (i.e., processing associated with recognition of the candidate commodities for the commodity G).

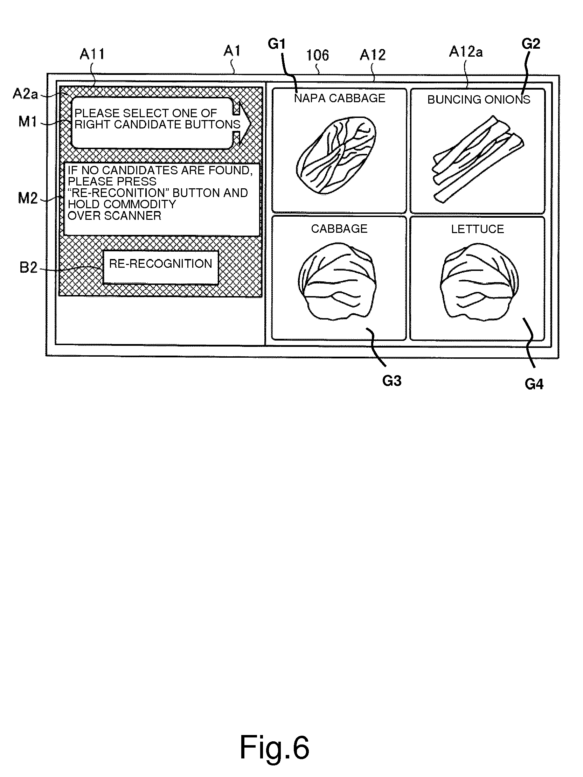

Fig. 6 is a view of an exemplary guidance screen displayed when the candidate commodities for the commodity G have been recognized. As shown in Fig. 6, a first guidance screen A2a is displayed in the picked-up image area A11 of the commodity candidate screen A1. The first guidance screen A2a displays a message M1 for prompting selection of the candidate commodities G1 to G4 for the commodity G, which are displayed in the commodity candidate area A12, and a message M2 for prompting re-recognition of the candidate commodities for the commodity G. A character string, for example, "Please select one of right candidate buttons" is displayed as the message M1. The candidate buttons in this case are positioned corresponding to the candidate commodities G1 to G4 in the display areas A12a on the touch panel 105. A character string, for example, "If no candidates are found, please press re-recognition button and hold commodity over scanner" is displayed as the message M2. The scanner in this case is the reading window 103. In addition, the first guidance screen A2a displays a re-recognition button B2 for instructing to re-recognize the candidate commodities for the commodity G.

When the operator of the commodity reading apparatus 101 selects one of the candidate commodities for the commodity G, the operator selects the candidate commodity corresponding to the commodity G from among the candidate commodities G1 to G4 for the commodity G, which are displayed in the commodity candidate area A12, according to the message M1. Further, when the commodity corresponding to the commodity G is not present in the candidate commodities G1 to G4 for the commodity G, which are displayed in the commodity candidate area A12, the operator of the commodity reading apparatus 101 operates the re-recognition button B2 according to the message M2. When the operator's operation is received through the re-recognition button B2, the guidance display section 1616 of the CPU 161 erases the first guidance screen A2a and causes the similarity judging section 1614 to re-start the recognition processing. Note that, for manually specifying the commodity G, the manual registration screen (not shown) is displayed by the display device 106, by the manual registration button B1 of the commodity candidate screen A1 receiving the operator's operation.

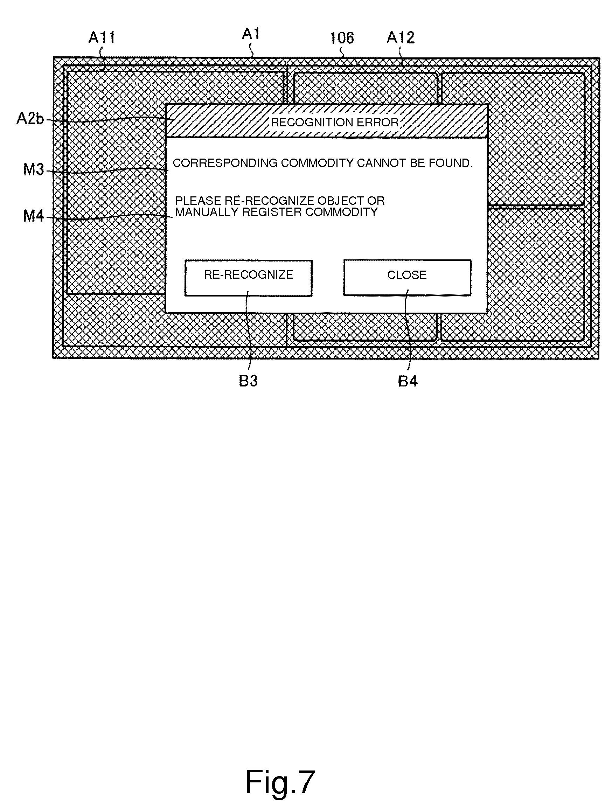

Further, Fig. 7 is a view of an exemplary guidance screen displayed when the candidate commodities for the commodity G have not been recognized. As shown in Fig. 7, a second guidance screen A2b is overlapped and displayed on the commodity candidate screen A1. The second guidance screen A2b displays a message M3 indicating the fact (recognition error) that the candidate commodities for the commodity G cannot be found and a message M4 for prompting re-recognition of the candidate commodities for the commodity G or manual specification of the commodity G. For example, a character string, for example, "Corresponding commodity cannot be found" is displayed as the message M3 on the second guidance screen A2b.
For example, a character string, for example, "Please re-recognize object or manually register commodity" is displayed as the message M4 on the second guidance screen A2b. In addition, the second guidance screen A2b displays a re-recognition button B3 and a close button B4.

In order to continue the recognition processing of the candidate commodities for the commodity G, the operator of the commodity reading apparatus 101 operates the re-recognition button B3 according to the message M4. When the operator's operation is received through the re-recognition button B3, the guidance display section 1616 of the CPU 161 erases the second guidance screen A2b and causes the similarity judging section 1614 to re-start the recognition processing.

Further, in order not to continue the recognition processing of the candidate commodities for the commodity G, the operator of the commodity reading apparatus 101 operates the close button B4 according to the message M4. When the operator's operation is received through the close button B4, the guidance display section 1616 of the CPU 161 erases the second guidance screen A2b. After that the operator of the commodity reading apparatus 101 operates the manual registration button B1 (see Fig. 5) of the commodity candidate screen A1. In response to reception of the operator's operation using the manual registration button B1, the CPU 161 displays the manual registration screen (not shown) on the display device 106.

Note that transition from the guidance screen to the manual registration screen (not shown) may be made possible by displaying, in the guidance screen A2a, A2b, a button having a function equivalent to that of the manual registration button B1 (see Fig. 5).

Referring back to Fig. 4, the input receiving section 1617 and the commodity candidate display section 1615 of the CPU 161 function as the selection receiver. The input receiving section 1617 receives various input operations via the touch panel 105 or the keyboard 107. The various input operations correspond to the display of the display device 106.

For example, the input receiving section 1617 of the CPU 161 receives operator's operation for selecting any one of the candidate commodities G1 to G4 for the commodity G, which are displayed by the display device 106. The input receiving section 1617 determines that the selected candidate commodity is the commodity (determined commodity) corresponding to the commodity G. Note that, when the commodity detecting section 1612 of the CPU 161 can detect a plurality of articles, the input receiving section 1617 may receive an operation of selecting a plurality of candidate commodities from among the candidate commodities G1 to G4 for the commodity G.

Regarding the determined commodity determined in the above-mentioned manner, the information output section 1618 of the CPU 161 outputs information (e.g., commodity ID and commodity name) indicating the determined commodity (commodity G), to the POS terminal apparatus 11 via the connection interface 175.

Note that the information output section 1618 of the CPU 161 may output the number of sales of the commodity G, which is separately input, as well as the information (commodity ID, etc.) indicating the determined commodity (commodity G) to the POS terminal apparatus 11 via the touch panel 105 or the keyboard 107. Further, the information output section 1618 may directly present the commodity ID read out from the PLU file F1 or may present the commodity name for identifying the commodity ID. In addition, the information output section 1618 may present a file name for the commodity image or may present a storage location for the commodity ID (storage address in the PLU file F1).

On the other hand, the CPU 61 of the POS terminal apparatus 11 functions as a sales registration section 611 by executing the programs. The sales registration section 611 of the CPU 61 performs sales registration of the commodity G corresponding to the commodity ID, on the basis of the commodity ID and the number of sales. The commodity ID and the number of sales are output from the CPU 161 of the commodity reading apparatus 101 (information output section 1618). Specifically, the sales registration section 611 refers to the PLU file F1 and records the presented commodity ID and commodity classification, a commodity name, a unit price, and the like, which correspond to that commodity ID, in a sales master file or the like together with the number of sales. In this manner, the sales registration section 611 performs the sales registration.

By the way, the article imaged by the image pickup device 164 may be an object unintentionally imaged by the operator with the image pickup device 164, not the commodity G voluntarily imaged by the operator with the image pickup device 164. In this embodiment, in order to cope with such a situation, the CPU 161 of the commodity reading apparatus 101 functions as the judgment section 1619, the check section 1620, and the continuation section 1621 by executing the programs.

The judgment section 1619 of the CPU 161 is operated at the following timing within the elapsed time T1 and judges whether or not the operator has an intention to pick up the image (see Step S5 to be described later). Specifically, the timing is timing between the recognition of the candidate commodities for the commodity G by the similarity judging section 1614 (selector) and the reception of the operator's operation for selecting one of the candidate commodities G1 to G4 by the input receiving section 1617 (selection receiver) (see No in Step S32 to be described later). Further, the timing is also timing between the end of the article detection from the picked-up image and the satisfaction of the predetermined condition associated with the elapsed time (see No in Step S41 to be described later). Note that whether or not the operator has an intention to pick up the image is, in other words, whether the possibility that the article based on which the candidate commodities for the commodity G have been recognized is unintentionally imaged is high or low. Therefore, at such timing, the judgment section 1619 makes a judgment at to whether the possibility that the article based on which the candidate commodities for the commodity G have been recognized is unintentionally imaged is high or low.

As a method of carrying out such a judgment, for example, the judgment section 1619 of the CPU 161 judges that the above-mentioned possibility is low, i.e., the operator has the intention to pick up the image when a certain elapsed time of the elapsed time T1 is larger than a first threshold (see Yes in Step S5 to be described later). Hereinafter, the certain elapsed time of the elapsed time T1 will be referred to as an elapsed time T2. The elapsed time T2 is a time between the article detection by the detection processing of the commodity detecting section 1612 and the end of detection of the article by the subsequent detection processing. Further, the judgment section 1619 judges that the above-mentioned possibility is high, i.e., the operator has no intention to pick up the image when the elapsed time T2 is smaller than the first threshold (see No in Step S5 to be described later). Note that the image pickup by the image pickup device 164 is continued for the elapsed time T2. Hereinafter, the image pickup continuation time between the detection of the article by the detection processing and the detection of the article by the subsequent detection processing will be simply referred to as an image pickup continuation time T3. Note that, in this embodiment, the elapsed time T2 is equal to the image pickup continuation time T3. That is, in such a judgment method example, when the image pickup continuation time T3 is equal to or longer than a predetermined time period (first threshold), the CPU 161 considers the image pickup by the image pickup device 164 as voluntary image pickup. On the other hand, when the image pickup continuation time T3 is shorter, the CPU 161 considers the image pickup by the image pickup device 164 as involuntary image pickup.
In this embodiment, such a judgment method example is used.

The elapsed time T1 is a value of the number of counts. The counting is, for example, started in an application after the article is detected by the detection processing. The elapsed time T2 or the image pickup continuation time T3 is a value of the number of counts when the article detection by the detection processing ends. The value of the number of counts "10" is used as the first threshold in this embodiment. Further, the value of the number of counts "30" having the first threshold is used as the second threshold. That is, the second threshold is a longer time than the first threshold. Further, the value of the number of counts is the number of times of performing article detection from a sequence of picked-up images by the detection processing of the commodity detecting section 1612 of the CPU 161. Based on the sequence of picked-up images, the candidate commodities G1 to G4 for the commodity G have been recognized. The sequence of picked-up images is a group of continuous image data items output by the image pickup device 164. The group of continuous image data items are recognized as image data items including the same article. Note that, in this embodiment, the value of the number of counts, for example, "30" is equivalent to 1 second. Therefore, the value of the number of counts "10" is equivalent to about 1/3 second.

When the judgment section 1619 judges that the above-mentioned possibility is low, i.e., the operator has the intention to pick up the image, the check section 1620 of the CPU 161 temporarily stops any of the processes performed between the image pickup by the image pickup device 164 and the recognition processing. At the same time, the check section 1620 of the CPU 161 receives operator's operation for selecting one of the candidate commodities for the commodity G or operator's operation for instructing to re-start the temporarily stopped processing. That is, in this embodiment, the check section 1620 considers the image pickup by the image pickup device 164 as the voluntary image pickup and displays the first guidance screen A2a when it can be judged that the value of the number of counts is equal to or larger than the first threshold "10", i.e., the image pickup continuation time T3 is equal to or longer than the predetermine time period.

Here, examples of processing that can be a target to be temporarily stopped and re-started as described above include image pickup by the image pickup device 164, image capturing by the image-capturing section 1611, detection processing by the commodity detecting section 1612, feature amount extraction by the feature amount extracting section 1613, similarity value calculation by the similarity judging section 1614, and the recognition processing by the similarity judging section 1614. Hereinafter, an example in the case where the processing that is the target to be temporarily stopped and re-started by the check section 1620 of the CPU 161 is recognition processing will be described.

The continuation section 1621 of the CPU 161 continues the image pickup when the judgment section 1619 judges that the above-mentioned possibility is high, i.e., the operator has no intention to pick up the image. That is, when it can be judged that the value of the number of counts is smaller than the first threshold "10", i.e., the image pickup continuation time T3 is shorter, the continuation section 1621 considers the image pickup by the image pickup device 164 as the involuntary image pickup. The continuation section 1621 continues the image pickup by the image pickup device 164 and waits until the detection processing of the article from the picked-up image by the voluntary image pickup is performed.

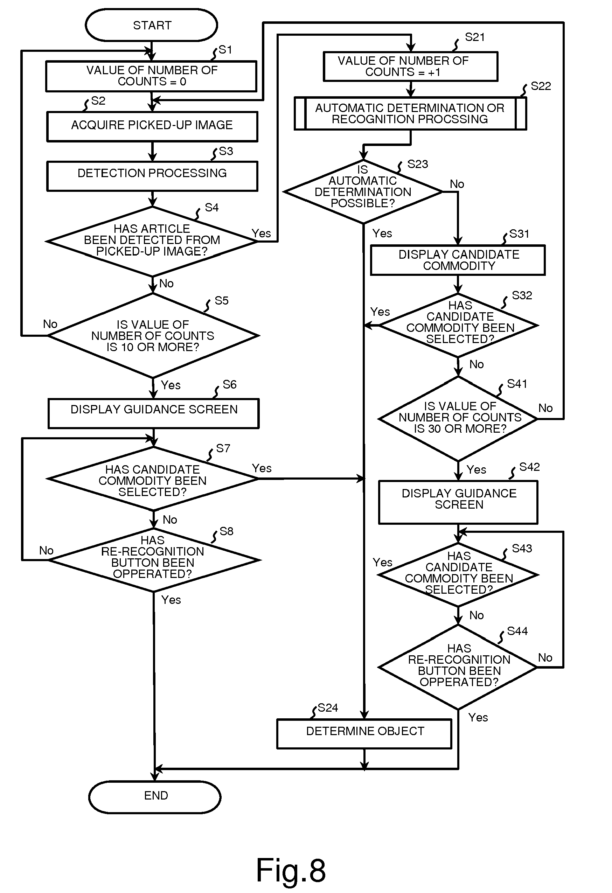

Hereinafter, an operation of the checkout system 1 will be described. Fig. 8 is a flowchart of processing executed by the commodity reading apparatus 101.

When the processing shown in Fig. 8 is started in response to the start or the like of the commodity registration by the POS terminal apparatus 11, the CPU 161 of the commodity reading apparatus 101 resets the number of counts in Step S1, by substituting "0" for the value of the number of counts provided in the RAM 163. Subsequently, in Step S2, serving as the image-capturing section 1611, the CPU 161 outputs an image pickup ON signal to the image pickup device 164 and starts image pickup by the image pickup device 164. In addition, serving as the image-capturing section 1611, the CPU 161 captures a picked-up image (frame image) from the RAM 163. The picked-up image (frame image) is obtained by the image pickup device 164 picking up an image of the image pickup target and then stored in the RAM 163 in advance.

Subsequently, in Step S3, serving as the commodity detecting section 1612, the CPU 161 performs detection processing of detecting an entire or partial article from the captured picked-up image (see Step S2). In the step S4, the CPU 161 judges whether or not the article has been detected from the picked-up image.
When the article has been detected from the picked-up image (Yes in Step S4), the processing of the CPU 161 proceeds to Step S21. In Step S21, the CPU 161 increments the value of the number of counts as "1".
Subsequently, in Step S22, the CPU 161 performs automatic determination for a determined commodity for the commodity G or recognition processing (object recognition processing) for candidate commodities for the commodity G.

That is, in Step S22, serving as the feature amount extracting section 1613, the CPU 161 first extracts, from the captured picked-up image (see Step S2), the feature amount of the detected article (see Step S3). In addition, in Step S22, serving as the similarity judging section 1614, the CPU 161 compares the feature amount of the article, which is extracted by the feature amount extracting section 1613, with the feature amount of each registered commodity registered in the PLU file F1 and calculates a similarity value thereof.

Next, in Step S23, serving as the similarity judging section 1614, the CPU 161 judges whether or not the automatic determination for the determined commodity for the commodity G is possible, on the basis of the calculated similarity values (see Step S22). When the CPU 161 can perform the automatic determination (Yes in Step S23), the processing of the CPU 161 proceeds to Step S24. In Step S24, the CPU 161 serving as the similarity judging section 1614 automatically determines the determined commodity for the commodity G (object determination) and terminates the processing.

Note that, after such processing, the CPU 161 serving as the information output section 1618 outputs information on a commodity ID and the like indicating the determined commodity, to the POS terminal apparatus 11. Here, when the number of sales is separately input by the operator via the touch panel 105 or the keyboard 107, the CPU 161 also outputs the number of sales to the POS terminal apparatus 11 together with the information indicating the determined commodity. Note that, if the number of sales is not input, the CPU 161 may output the number of sales "1" as a default value.

In Step S23 described above, when the processing of the CPU 161 does not proceed to the automatic determination but registered commodities, which may be equivalent to the detected article, are present (No in Step S23), the CPU 161 serving as the similarity judging section 1614 recognizes those registered commodities (commodity IDs) as the candidate commodities for the commodity G. After the recognition of the candidate commodities for the commodity G, the processing of the CPU 161 proceeds to Step S31.

Next, in Step S31, serving as the commodity candidate display section 1615, the CPU 161 reads out the recognized candidate commodities for the commodity G (see Step S23) from the PLU file F1. In addition, in Step S31, the CPU 161 displays the read-out candidate commodities for the commodity G in the display areas A12a of the commodity candidate area A12 (see Fig. 5).
Subsequently, in Step S32, the CPU 161 serving as the input receiving section 1617 judges whether or not operator's operation for selecting one of the candidate commodities G1 to G4 for the commodity G has been received via the touch panel 105 or the keyboard 107.

In Step S32 described above, when it is judged that the operator's operation for selecting one of the candidate commodities G1 to G4 for the commodity G has been received (Yes in Step S32), the processing of the CPU 161 proceeds to Step S24.
In Step S24, the CPU 161 determines that the selected candidate commodity is the determined commodity corresponding to the commodity G (object determination), and terminates the processing.

In Step S32 described above, when it is judged that the operator's operation for selecting one of the candidate commodities for the commodity G has not been received (No in Step S32), the processing of the CPU 161 proceeds to Step S41. In Step S41, the CPU 161 checks whether or not the value of the number of counts is equal to or larger than the second threshold "30". Here, when it is confirmed that the value of the number of counts is smaller than the second threshold "30" (No in Step S41), the processing of the CPU 161 returns to Step S2 described above.

That is, when it is confirmed that the value of the number of counts is smaller than the second threshold "30", the CPU 161 continues the processing such as capturing the picked-up image.

In Step S41 described above, it is confirmed that the value of the number of counts is equal to or larger than the second threshold "30" (Yes in Step S41), the processing of the CPU 161 proceeds to Step S42. In Step S42, the CPU 161 displays the first guidance screen A2a (see Fig. 6) as the guidance display section 1616. Subsequently, in Step S43, the CPU 161 judges whether or not operator's operation for selecting one of the candidate commodities G1 to G4 for the commodity G has been received via the touch panel 105 or the keyboard 107. In addition, in Step S44, the CPU 161 judges whether or not the re-recognition button B2 has received operator's operation. In Steps S43 and S44 described above, the CPU 161 waits until any of the above-mentioned operations is received (No in Step S43 and No in Step S44). When any one of the candidate commodities G1 to G4 has been selected (Yes in Step S43), the processing of the CPU 161 proceeds to Step S24. Further, when the re-recognition button B2 has been operated (Yes in Step S44), the processing of the CPU 161 is terminated. That is, the CPU 161 performs the image pickup by the image pickup device 164 again.

Hereinafter, a case where the CPU 161 cannot detect the article from the picked-up image (No in Step S4) in Step S4 described above will be described.
In this case, the processing of the CPU 161 proceeds to Step S5. In Step S5, the CPU 161 makes a judgment as to whether or not the value of the number of counts is equal to or larger than the first threshold "10". First, descriptions will be made classifying the case where it is judged in in Step S5 that the value of the number of counts is smaller than the first threshold "10" (No in Step S5) into a case where the value of the number of counts is 0 and another case (where the value of the number of counts is 1 to 9) will be described.

In the former (where value of number of counts = 0) of the classified cases, the processes of from the image pickup by the image pickup device 164 to the recognition processing of the candidate commodities for the commodity G are not performed. Therefore, in this case, the CPU 161 returns the processing to Step S1 for the purpose of waiting for the image pickup by the image pickup device 164.

On the other hand, the latter (where 1 ≤ value of number of counts ≤ 9) of the classified cases is a case where the article is imaged for a very short time (e.g., about 1/3 second or less), the recognition processing is performed, and then, immediately after the recognition processing, the article detection from the picked-up image ends. Further, the case where the article detection from the picked-up image ends is a case where it is conceivable that the article becomes out of frame (deviates from the image pickup area of the image pickup device 164). In this embodiment, in this case, the CPU 161 serving as the judgment section 1619 first judges, in Step S2 described above, that the involuntary image pickup by the operator has been performed. Next, the CPU 161 serving as the continuation section 1621 returns the processing to Step S1 for the purpose of continuing the processes of from the image pickup by the image pickup device 164 to the recognition processing of the candidate commodities for the commodity G.

Next, in Step S5, a case where it is judged that the value of the number of counts is equal to or larger than the first threshold "10" (Yes in Step S5), i.e., a case where the number of counts is equal to or larger than the first threshold "10" will be described. In this case, first, the CPU 161 serving as the judgment section 1619 judges the image pickup in Step S2 described above as voluntary image pickup. Next, in Step S6, the CPU 161 serving as the check section 1620 temporarily stops the recognition processing and displays the first guidance screen A2a on the display device 106 (see Fig. 6). Subsequently, in Step S7, the CPU 161 judges whether or not operator's operation for selecting the candidate commodities G1 to G4 has been received via the touch panel 105 or the keyboard 107. In addition, in Step S8, the CPU 161 judges whether or not the re-recognition button B2 has received the operator's operation.

In Steps S7 and S8 described above, the CPU 161 waits until any of the above-mentioned operations is received (No in Step S7 and No in Step S8). In Step S7 described above, when any one of the candidate commodities G1 to G4 has been selected

(Step S7: Yes), the processing of the CPU 161 proceeds to Step S24. Further, when the re-recognition button B2 has been selected (Step S8: Yes), the CPU 161 terminates the processing. That is, the CPU 161 performs the image pickup by the image pickup device 164 again.

In this manner, the CPU 161 makes a judgment as to a possibility that the article of the picked-up image is unintentionally imaged. When it can be judged that the possibility that the article is unintentionally imaged is high, the CPU 161 continues the processes of from the image pickup by the image pickup device 164 to the recognition processing of the candidate commodities for the commodity G. When it can be judged that the possibility that the article is unintentionally imaged is low, the CPU 161 temporarily stops, for example, the recognition processing of the candidate commodities for the commodity G. In addition, the CPU 161 temporarily stops the recognition processing and receives operator's operation for selecting one of the candidate commodities for the commodity G or operator's operation for the instructing to re-start the recognition processing.

As described above, in accordance with this embodiment, in the commodity reading apparatus 1, it is possible to reduce the time and effort of the operator, which would be spent if the candidate commodities for the commodity G have been presented on the basis of the involuntary image pickup by the operator.

### Modified Example

In the above-mentioned embodiment, on the basis of the duration of the elapsed time T2 (or the image pickup continuation time T3), the judgment section 1619 of the CPU 161 makes a judgment as to the possibility that the article of the picked-up image, on which the recognition processing of the candidate commodities for the commodity G is based, has been unintentionally imaged. In contrast, when the article in the picked-up image is in focus, the judgment section of the CPU 161 according to this modified example judges that the possibility that the article is unintentionally imaged is low. Further, the judgment section of the CPU 161 judges that the possibility that the article is unintentionally imaged is high when the article of the picked-up image is out of focus.

The image pickup device used for object recognition as described above has a subject distance and a depth of field, which are suitable for picking up the image of the article located in a space extended from the reading window by a predetermined distance. Therefore, the fact that the article of the picked-up image has been out of focus means that the article has not been held by the operator at a position suitable for image pickup with respect to the reading window. That is, the fact that the article of the picked-up image has been out of focus means that the involuntary image pickup by the operator has been performed.

Also when the parameter used for the judgment section of the CPU 161 to make a judgment as to the possibility that the article of the picked-up image has been unintentionally imaged is thus changed, similar effects to those of the embodiment described above can be exerted.

Note that, although the commodity reading apparatus 101 is employed as the exemplary information processing apparatus and the checkout system 1 includes the POS terminal apparatus 11 and the commodity reading apparatus 101 in each of the above-mentioned embodiment and modified example, embodiments are not limited thereto. For example, the information processing apparatus may be the checkout system 1. Alternatively, for example, the information processing apparatus may be the POS terminal apparatus 11. Still alternatively, for example, the information processing apparatus may be a self checkout apparatus. The self checkout apparatus is an apparatus with which the customer himself/herself checks out.

Note that the programs to be executed in the information processing apparatus according to this embodiment are provided by being incorporated in the ROM or the like in advance. The programs to be executed in the information processing apparatus according to this embodiment may be provided by being recorded as a file in an installable form or an executable form on a recording medium readable by a computer. The recording medium includes a CD-ROM, a flexible disk (FD), a CD-R, a digital versatile disk (DVD), and the like. In addition, the programs to be executed in the information processing apparatus according to this embodiment may be provided by being stored in a computer connected to a network such as the Internet and downloaded via the network. Further, the programs to be executed in the information processing apparatus according to this embodiment may be provided or distributed via the network such as the Internet.

The programs to be executed in the information processing apparatus according to this embodiment has a module configuration and the functions of the modules are realized by the CPU reading out programs of the modules from a storage medium and executing the read-out programs.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. An information processing apparatus, comprising:
an image pickup device that sequentially picks up an image of an image pickup target, which is positioned in a predetermined image pickup area by an operator for picking up an image of a commodity to be purchased by a customer, and outputs the picked-up image;
a display device that displays information on the picked-up image;
a memory for storing a computer-executable program; and
a processor that, by executing the program stored in the memory,
performs detection processing of detecting an article from the output picked-up image,
performs recognition processing of
comparing, when the article is detected by the detection processing, similarity values between the detected article and a plurality of registered commodities that are references with one another, and
recognizing, from among the plurality of registered commodities, a candidate commodity for the commodity to be purchased by the customer,
causes the display device to display the candidate commodity recognized by the recognition processing in a selectable manner,
judges, when the detection of the article by the detection processing ends, whether or not the operator has an intention to pick up the image, and
continues the recognition processing when it is judged that the operator has no intention to pick up the image.

2. The information processing apparatus according to Claim 1, wherein
the processor further temporarily stops, when it is judged that the operator has the intention to pick up the image, at least part of processing performed before the recognition processing, and receives an operation for selecting the candidate commodity displayed by the display device or receives an operation for instructing to re-start the temporarily stopped processing.

3. The information processing apparatus according to Claim 1 or 2, wherein
the processor
judges that the operator has the intention to pick up the image when an elapsed time between the detection of the article by the detection processing and the end of the detection of the article by the subsequent detection processing is equal to and larger than a predetermined first threshold, and
judges that the operator has no intention to pick up the image when the elapsed time is smaller than the first threshold.

4. The information processing apparatus according to Claim 1 or 2, wherein
the processor
judges whether or not the article of the picked-up image is in focus, and
judges that the operator has the intention to pick up the image when the article of the picked-up image is in focus, and
judges that the operator has no intention to pick up the image when the article of the picked-up image is out of focus.

5. The information processing apparatus according to Claim 3, wherein
the processor
further judges whether or not a predetermined condition associated with an elapsed time after the detection of the article by the detection processing is satisfied, and
temporarily stops the recognition processing when the predetermined condition associated with the elapsed time after the detection of the article by the detection processing is satisfied, and causes the display device to display a guidance screen for receiving an operation for selecting the candidate commodity displayed by the display device and an operation for instructing to re-start the temporarily stopped recognition processing.

6. The information processing apparatus according to Claim 5, wherein
the processor judges, when the elapsed time after the detection of the article by the detection processing is equal to and larger than a predetermined second threshold different from the predetermined first threshold, that the predetermined condition associated with the elapsed time after the detection of the article by the detection processing is satisfied.

7. The information processing apparatus according to Claim 6, wherein
the predetermined first threshold is a time period shorter than the predetermined second threshold.

8. The information processing apparatus according to any one of Claims 1 to 7, further comprising
a first storage device that stores the picked-up image output by the image pickup device, wherein
the processor
reads out the picked-up image from the first storage device in the order of storing the picked-up image in the first storage device, and
performs the detection processing and the recognition processing on the basis of the read-out picked-up image.

9. The information processing apparatus according to Claim 8, further comprising
a second storage device that stores a plurality of feature amounts of the plurality of registered commodities, wherein
the processor performs the recognition processing of
extracting a feature amount of the article, which is detected by the detection processing, on the basis of the read-out picked-up image,
comparing the extracted feature amount of the article with each of the feature amounts of the plurality of registered commodities, the plurality of feature amounts being stored in the second storage device,
calculating, on the basis of a result of the comparison, a plurality of similarity values for each of the plurality of registered commodities,
judging whether or not each of the calculated similarity values is equal to or larger than a predetermined threshold, and
selecting one of the registered commodities, which has one of the calculated similarity values, which is judged to be equal to or larger than the predetermined threshold, as the candidate commodity for the detected article, and recognizing the selected candidate commodity for the article as a candidate commodity for the commodity to be purchased by the customer.

10. The information processing apparatus according to any one of Claims 1 to 9, wherein
the processor causes the display device to display information on the candidate commodity recognized by the recognition processing, and
the display device displays the picked-up image in a predetermined display area together with the information on the candidate commodity.

11. The information processing apparatus according to Claim 10, wherein
the information on the candidate commodity includes an image and a commodity name of the registered commodity recognized as the candidate commodity.

12. The information processing apparatus according to Claim 10 or 11, wherein
the processor temporarily stops, when it is judged that the operator has the intention to pick up the image, the recognition processing and causes the display device to display a guidance screen for receiving operator's operation for selecting the candidate commodity displayed on the display device and operator's operation for instructing to re-start the temporarily stopped recognition processing.

13. The information processing apparatus according to any one of Claims 10 to 12, wherein
the processor temporarily stops, when it is judged that the operator has the intention to pick up the image, the recognition processing and displays, in the predetermined display area, a message for prompting selection of the candidate commodity and a message for prompting instruction to re-start the temporarily stopped recognition processing instead of displaying the picked-up image.

14. A method of controlling an information processing apparatus, comprising:
performing detection processing of detecting an article from a picked-up image output from an image pickup device that sequentially picks up an image of an image pickup target, which is positioned in a predetermined image pickup area by an operator;
performing recognition processing of
comparing, when the article is detected by the detection processing, similarity values between the detected article and a plurality of registered commodities that are references with one another, and
recognizing, from among the plurality of registered commodities, the candidate commodity for a commodity to be purchased by a customer;
causing a display device to display the candidate commodity recognized by the recognition processing in a selectable manner; and
judging whether or not the operator has an intention to pick up the image when the detection of the article by the detection processing ends, and continuing the recognition processing when it is judged that the operator has no intention to pick up the image.

15. The method of controlling an information processing apparatus according to Claim 14, further comprising:
temporarily stopping at least part of processing performed before the recognition processing when it is judged that the operator has the intention to pick up the image; and
receiving operator's operation for selecting the candidate commodity displayed on the display device or receiving operator's operation for instructing to re-start the temporarily stopped processing.
